# FASCICULE DE BREVET EUROPEEN

(11) **EP 0 353 313 B1**
(45) Date de publication et mention de la délivrance du brevet: **28.04.1993**
(21) Numéro de dépôt: 88112076.0
(22) Date de dépôt: 27.07.1988
(51) Int. Cl.: B29C 73/04

(54) **Rustine trapézoîdale perfectionnée à appliquer sur les parties latérales des pneus radiaux sans chambre à air ou avec chambre à air ayant subi des ruptures des cordes métalliques, et procédé de fabrication**
Traperförmiges Pflaster für die Reparatur von Schäden der metallischen Kordfäden an den Seitenwänden von radialen Reifen mit oder ohne Schlauch und Herstellungsverfahren
Trapezoidally shaped rubber patch to repair broken metallic cords in the sidewalls of tubeless or tube-type radial tyres, and manufacturing process

(43) Date de publication de la demande: 07.02.1990
(73) Titulaire: R.F.P. S.r.l. Ricostruzione Fascia Prestampata, I-70026 Modugno (Bari) (IT)
(72) Inventeur: Ferrara, Giuseppe, I-70124 Bari (IT)
(74) Mandataire: Russo, Saverio, Dott. Ing.

(56) Documents cités:
- DE-A- 1 505 881
- FR-A- 1 154 159
- FR-A- 1 211 507
- FR-A- 1 310 212
- GB-A- 972 670
- US-A- 4 285 382

## Description

La présente invention concerne une rustine trapézoïdale selon le préambule de la revendication 1 et un procédé de fabrication de la rustine selon le préambule de la revendication 5.

Cette invention a pour objet une rustine servant à réparer aussi bien des pneus sans chambre à air -tubeless- que des pneus avec chambre à air -tube type- de structure radiale, ayant subi des déformations ou des ruptures de trois cordes métalliques ou plus dans leurs parties latérales: les rustines mentionnées ci-dessus peuvent être appliquées soit aux pneus qui doivent être réparés, soit aux pneus qui doivent être soumis à un rechapage.

Les rustines trapézoïdales, objet des inventions du demandeur, destinées à remplacer les rustines rectangulaires formées de plusieurs toiles superposées, avec des cordes en fibres synthétiques et métalliques, bien qu'elles aient brillament résolu le problème des réparations et des rechapages des pneus radiaux endommagés dans leurs parties latérales, nécessitent, comme nous avons pu le constater, de perfectionnements supplémentaires pour éliminer les inconvénients causés par leur application, inconvénients énumérés ci-dessous: 1) Impossibilité de placer la rustine avec ses cordes métalliques exactement parallèles et superposées aux parties saines des cordes métalliques du pneu qui ont subi des ruptures, due à l'impossibilité de repérer les zones de la rustine dans lesquelles sont insérées ces cordes et donc nécessité d'augmenter le temps de travail pour accomplir cette opération en bonne et due forme.

2) Déplacements de la rustine pendant sa vulcanisation sur le pneu, causés par les poussées du contre-moule à chambre à air sur la rustine, en particulier de la zone extrème de la rustine au sud du goujon en caoutchouc: cela peut provoquer, après la vulcanisation et le gonflage pour l'utilisation, des renflements locaux du pneu dûs au non parallélisme entre les cordes du goujon en caoutchouc et celles du pneu.

3) Nécessité, pour leur application, d'enlever les couches de caoutchouc qui recouvrent à l'intérieur les cordes radiales du pneu, pour toute la surface de la rustine, vu que la surface d'attaque est celle de la rustine elle-même, comprenant la couche de caoutchouc avec cordes métalliques totalement plate; il est donc nécessaire de créer une cavité de surface égale à celle de toute la rustine si l'on veut mettre en contact direct les cordes métalliques de la rustine avec celles du pneu.

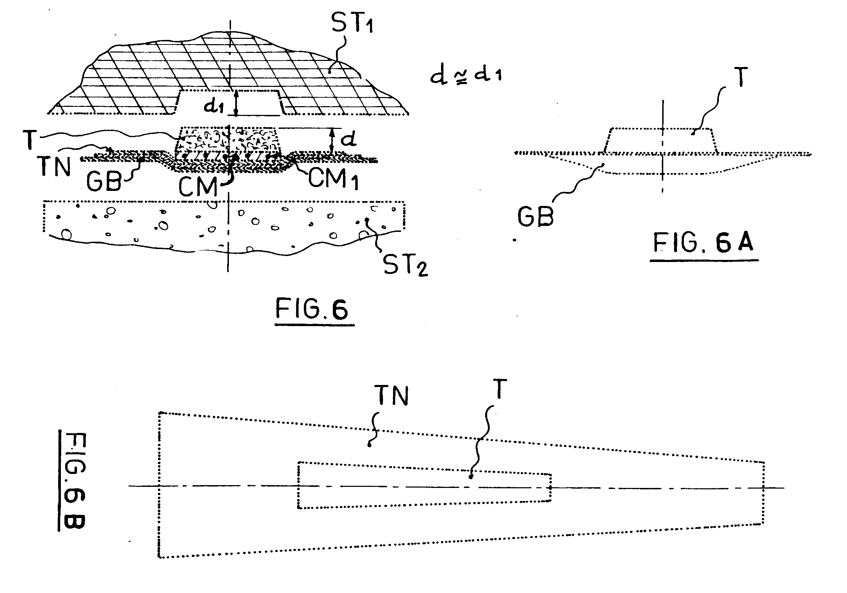

Au cours de la fabrication des rustines on remarque également, voir fig.6 et 6a, de légères déformations de la couche de caoutchouc avec cordes métalliques CM, des couches de caoutchouc butyl CB et des toiles gommées TN pendant le moulage et la vulcanisation.

Le but principal de cette invention est d'éliminer tous ces inconvénients en apportant des perfectionnements aux rustines trapézoïdales mentionnées ci-dessus.

Un autre but important est celui de fournir un procédé de réalisation et des moyens qui permettent la fabrication et en même temps la vulcanisation des rustines ainsi perfectionnées, sans que ne se créent des déformations des éléments qui composent les rustines.

L'invention telle qu'elle est revendiquée résoud en effet le problème qui se pose à l'opérateur pour faciliter le positionnement exact de la rustine dans la zone dans laquelle a eu lieu la rupture des cordes métalliques du pneu, c'est à dire comment superposer exactement les cordes métalliques de la rustine aux cordes du pneu qui ont subi les ruptures, sans devoir mettre à nu les cordes latérales saines, en enlevant le caoutchouc qui les recouvre.

En outre cette invention résoud le problème de fabriquer une rustine dans laquelle la couche de caoutchouc renfermant les cordes métalliques ressorte en relief sur la surface d'attaque de la rustine.

Autre problème résolu par cette invention: maintenir fermement en position la rustine sur le pneu, pendant les déplacements que le pneu subit au cours des différentes phases du rechapage, avant la vulcanisation de la sous-couche d'attaque de la rustine au pneu.

La rustine selon l'invention est décrite en détail par la suite avec référence aux planches de dessins qui en illustrent une exécution favorite, mais qui n'empêche pas d'autres perfectionnements, dans le cadre de l'invention.
La figure 1 représente une coupe transversale AA de la rustine (voir fig.1B) et du moule nécessaire à la fabrication;
La figure 1A, une vue de la rustine d'une de ses extrémités, prête à l'emploi;
La figure 1B, une vue d'en haut de la rustine sur laquelle sont indiquées en pointillé les cordes métalliques insérées dans la couche de caoutchouc en relief;
La figure 1C, une vue longitudinale de la rustine et de son moule;
La figure 2, les dimensions de la rustine en rapport avec celles du pneu, dans la zone d'application;
La figure 3, le moyen d'application de la rustine;
La figure 4, le moule nécessaire à la réalisation du procédé de fabrication de la rustine;
La figure 5, le même moule pendant la vulcanisation et le moulage de la rustine;
La figure 6, le moyen de fabrication de la rustine trapézoïdale non perfectionnée, appartenant à la technique antérieure;
La figure 6A, une vue d'une de ses extrémités de la rustine selon la figure 6;
La figure 6B, une vue d'en haut de la rustine selon la figure 6.

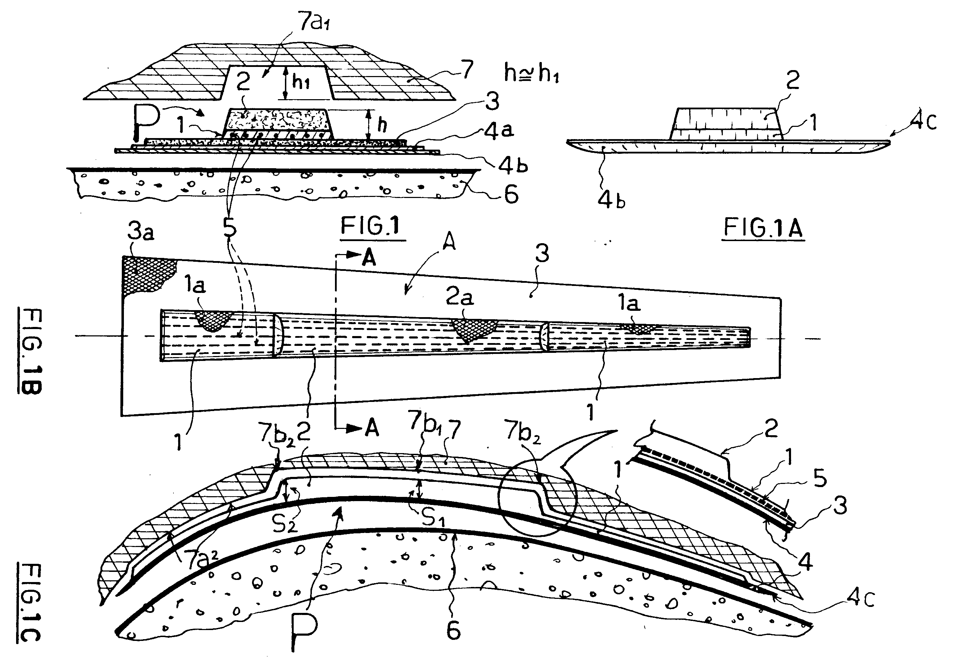

Dans la rustine selon l'invention,voir Fig. 1 et suivantes, la couche de caoutchouc 1 contenant les cordes métalliques radiales est en relief par rapport à la surface d'attaque de la toile gommée 3 ou, en l'absence de cette dernière, de la couche de caoutchouc 4a avec des trames déviées ou non déviées et elle a une forme trapézoïdale, c'est à dire une largeur variable comme celle de la base du goujon trapézoïdal en caoutchouc 2 qui lui est superposée et comme celle que l'on obtient par le prolongement des côtés de la base du goujon en caoutchouc, pour une longueur qui permette l'application de cette couche en relief jusqu'au sous-talon d'un côté, et jusqu'à la bande de l'autre.

Cela permet de monter la rustine avec les cordes métalliques exactement superposées et parallèles aux cordes du pneu au sud et au nord de la fenêtre F.

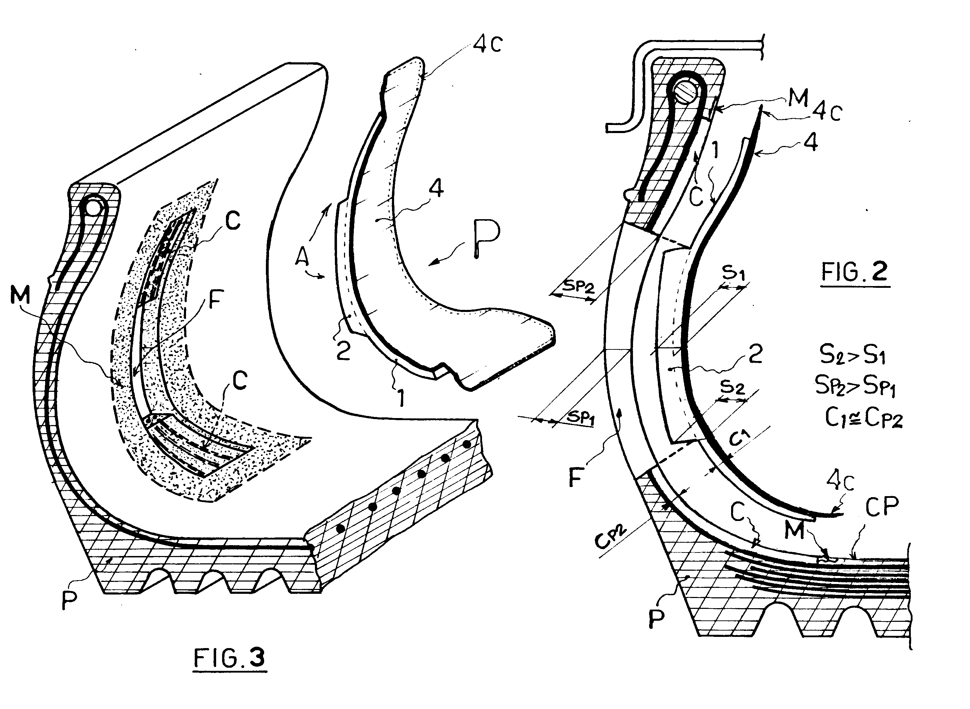

Pour l'application de la rustine, le caoutchouc du pneu est entaillé dans la zone de flexion la plus importante de la partie latérale de l'extérieur, tout d'abord en suivant le parcours des cordes métalliques radiales et ensuite transversalement de manière à enlever les parties des cordes métalliques qui ont subi des ruptures ou des dommages, pour former, voir fig.3, une fenêtre F de forme et de surface égales à celles qui sont établies par le goujon en caoutchouc 2.

Pour cela, pour chaque secteur (champ d'application du pneu) et section du pneu, c'est à dire en rapport avec ses dimensions et son utilisation, il peut y avoir des rustines de dimensions différentes en fonction de la largeur et de la longueur du goujon en caoutchouc, c'est à dire d'un goujon en caoutchouc qui entre dans une fenêtre dont la largeur puisse comprendre trois cordes cassées ou, en alternative, d'un goujon en caoutchouc qui entre dans une fenêtre dont la largeur puisse comprendre quatre cordes cassées ou plus: puisqu'en coupant radialement les côtés de cette fenêtre, on doit rester dans l'espace compris entre deux cordes, et vu que cet espace est limité à quelques mm., les dimensions transversales de la fenêtre sont étroitement liées au nombre de cordes interrompues, c'est à dire à celles des goujons en caoutchouc.

Une fois effectué le découpage de la fenêtre F, sur la surface interne du pneu on creuse une rainure C ayant une largeur et une profondeur égales à la largeur et à l'épaisseur de la couche en relief 1 des rustines et d'une longueur qui permette d'arriver jusqu'au sous-talon d'un côté et jusqu'à la bande de l'autre.Autour de la fenêtre et de la rainure C,Fig.3, on lime la surface interne M du pneu sur une surface égale à celle de la rustine, exeptée la largeur de quelques mm. des bords émoussés 4c, de manière à enlever seulement la couche de caoutchouc butyl et de manière à créer une cavité pour le logement des couches 4 de la rustine: les bords émoussés 4c,Fig.2, sont alors posés et vulcanisés au contact de la surface interne du pneu qui constitue le périmètre de la zone malade M, pour obtenir la tenue à l'air en pression, dans le cas des pneus sans chambre à air.

La couche en relief 1, obligeant l'opérateur à placer la rustine dans la rainure C, Fig.2 et 3, fait en sorte que les cordes métalliques de la rustine se superposent uniquement aux cordes du pneu desquelles ont été enlevées les parties abimées, et permet ainsi de maintenir la rustine dand une position correcte, avant la vulcanisation, au cours des phases du rechapage.

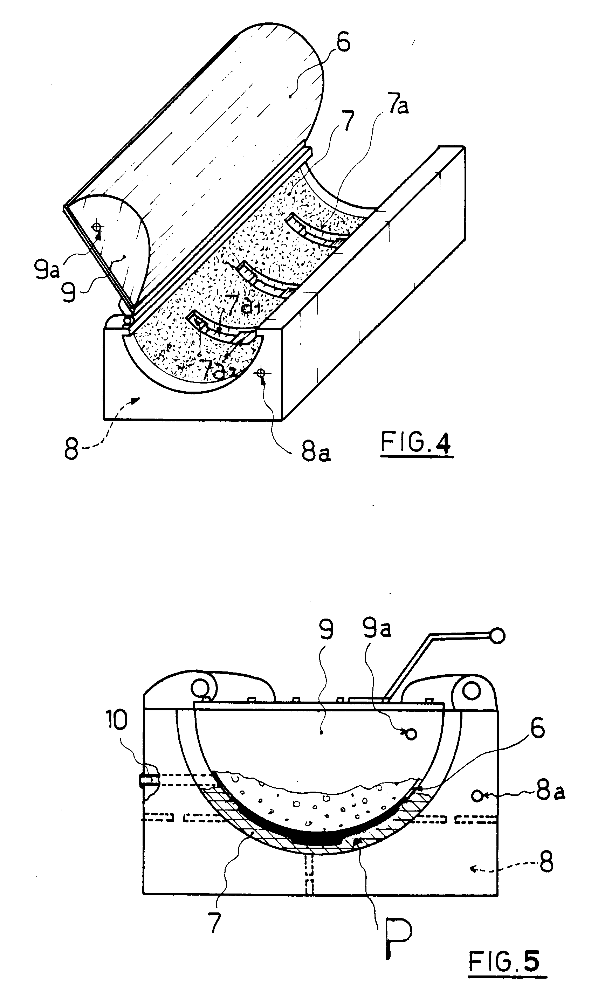

Le procédé de fabrication se base sur un moule semi-cylindrique en caoutchouc 7 formé d'une couche de caoutchouc d'une épaisseur appropriée, par exemple 15 mm., voir Fig. 4 et 5, réchauffé par une chambre à vapeur 8, pour effectuer après le moulage la vulcanisation, dans lequel les empreintes 7a destinées à former la rustine, en correspondance avec le goujon en caoutchouc, Fig.1, ont une profondeur h1 pratiquement égale à la somme h des épaisseurs du goujon en caoutchouc 2 et de la couche de caoutchouc 1 avec cordes métalliques, de préférence une profondeur égale à l'épaisseur du goujon en caoutchouc 2 plus 3/4 de l'épaisseur de la couche de caoutchouc 1 avec cordes métalliques, alors que dans les autres zones qui correspondent aux zones nord et sud du goujon en caoutchouc desquelles doit ressortir en relief uniquement la couche de caoutchouc contenant les cordes métalliques, la profondeur des empreintes est égale uniquement à l'épaisseur de la couche 1, c'est à dire si l'on préfère aux 3/4 de cette épaisseur.

L'empreinte a une forme trapézoïdale et une largeur variable le long de l'axe longitudinal comme celle de la base du goujon en caoutchouc et du prolongement de ses côtés.

En d'autres termes, voir Fig.1, alors que dans le moule pour la formation de la rustine non perfectionnée selon la Demande de Brevet Italien n^{o} 2101/A87 et selon la Demande de Brevet Européen n^{o} 0279901 il y avait une seule empreinte d'une profondeur d₁ égale à celle de l'épaisseur d du goujon en caoutchouc, dans la rustine perfectionnée selon cette dernière invention, il y a une empreinte 7a₁ d'une profondeur égale à la somme des épaisseurs du goujon en caoutchouc et de la couche de caoutchouc contenant les cordes métalliques, dans les zones du goujon en caoutchouc et, sur le prolongement de l'axe longitudinal de cette empreinte, deux empreintes 7a₂ d'une profondeur pratiquement égale à l'épaisseur de la couche de caoutchouc avec cordes métalliques sur toute sa longueur.

Cela permet d'obtenir, Fig.1A, une rustine avec une couche de caoutchouc avec cordes métalliques 1 en relief par rapport à la surface d'attaque formée de la couche de toile gommée 3 ou, en l'absence de cette dernière, des couches de caoutchouc 4; on évite ainsi les déformations aussi bien de cette couche 1 que de la couche 4, autour de la couche 1 elle-même, par l'action du contre-moule 6.

En outre, puisque l'épaisseur S₂, Fig.2, somme des épaisseurs du goujon en caoutchouc 2 et de la couche de caoutchouc avec cordes métalliques 1, aux extrémités nord et sud du goujon en caoutchouc, doit être égale à l'épaisseur correspondante dans les parties latérales du pneu, cette épaisseur S₂ devra être supérieure à l'épaisseur S₁ en correspondance avec le milieu du même goujon en caoutchouc, comme c'est le cas pour la partie latérale du pneu et donc,Fig.1C, la coupe longitudinale de l'empreinte 7a du moule en correspondance avec le goujon en caoutchouc varie de manière à ce que S₂ soit supérieur à S₁.

Le contre-moule 6,Fig.4 et 5, a une forme semi-cylindrique et il est obtenu en, gonflant à une pression appropriée, avec de l'air et de la vapeur, une chambre formée d'une feuille de caoutchouc d'une épaisseur adéquate appliquée sur deux semi-disques semi-cylindriques 9.

La coupe transversale, Fig.1, de l'empreinte du moule en correspondance avec le goujon en caoutchouc est de forme légèrement trapézoïdale, tandis que la coupe longitudinale de cette même empreinte, Fig.1C, à l'extrémité 7b₂ a une hauteur S₂ supérieure à la hauteur S₁ du milieu 7b₁ pour obtenir un goujon dans lequel la hauteur S₂, aux extrémités, soit supérieure à la hauteur S₁ au mileu.

Pour former la fenêtre et les rainures dans lesquelles est appliquée la rustine, on peut meuler le logement M de la partie plate de la rustine, ou bien utiliser des moulures de dimensions différentes pour chaque secteur et section du pneu,qui indiquent aussi les zones où doivent être effectuées les entailles transversales.

La surface plate 3 ainsi que la surface de la couche en relief 1 et du goujon en caoutchouc 2, Fig.1B, sont moletées comme 3a, 1a et 2a: la surface libre de la couche butylique 4b est elle aussi moletée.

La toile gommée 3 peut être également supprimée en réduisant le nombre des couches de la rustine superposées à celles du goujon en caoutchouc 2, de la couche de caoutchouc 1 en relief avec cordes métalliques, et des couches 4 et 4 b de caoutchouc élastique: dans ce cas on augmente l'épaisseur de la couche de caoutchouc 4a.

La toile gommée 3 peut avoir une trame déviée par rapport à l'axe longitudinal décrit dans la Demande de Brevet Européen n^{o}87114126.3 du même demandeur.

Le procédé de fabrication complet comprend les phases suivantes:
a) Découpage avec emporte-pièce des éléments en caoutchouc cru qui forment les rustines d'une ou de plusieurs séries, dans les mesures nécessaires et de forme trapézoïdale, à partir de feuilles de caoutchouc de type approprié, de toiles gommées avec trames déviées et non déviées,de feuilles de caoutchouc avec cordes métalliques à parcours radial.
b) Superposition des différents éléments en caoutchouc cru qui composent chaque rustine, avec collage réciproque à l'aide d'un solvant ou d'un autre moyen adéquat.
c) Moulage avec un moule et un contre-moule semi-cylindrique pour obtenir aussi bien le bombage de la rustine avec une convexité tournée vers la surface d'attaque, que l'application exacte en relief de la couche de caoutchouc contenant les cordes métalliques radiales sur les couches formées des toiles gommées ou en l'absence de ces dernières, sur les feuilles de caoutchouc 4, et pour obtenir la vulcanisation nécessaire, les surfaces du moule et du contre-moule étant traitées de manière à provoquer le moletage des surfaces de chaque rustine, la surface d'attaque étant également recouverte d'une couche de polyester.

La rustine peut être vendue dans le commerce sans sous-couche d'attaque ou avec sous-couche d'attaque vulcanisable à basse température ou à température élevée.

## Revendications

1. Rustine trapézoïdale perfectionnée à appliquer sur les parties latérales des pneus radiaux sans chambre à air ou avec chambre à air, ayant subi des ruptures des cordes métalliques, dans laquelle, sous la couche des cordes métalliques radiales, sont placées aucune ou plusieures couches (3) de toiles avec trames en fibres synthétiques déviées ou non déviées par rapport à l'axe longitudinal, et une ou plusieurs couches de caoutchouc d'élasticité et de caractéristiques différentes (4a) et (4b), et dans laquelle aussi bien la surface d'attaque que la surface opposée sont moletées, la rustine étant bombée dans le sens longitudinal de manière à ce que sa convexité soit tournée vers la surface d'attaque, la rustine étant également pourvue d'un goujon en caoutchouc (2) devant être inséré dans une fenêtre decoupée sur la partie latérale du pneu, fenêtre de laquelle ont été enlevées les cordes interrompues ou abimées, caractérisée par le fait que la couche de caoutchouc (1) contenant les cordes métalliques radiales est en relief par rapport à la surface d'attaque plate de la rustine, c'est à dire de la couche de toiles (3), et a la même largeur que la base du goujon en caoutchouc (2), dans la zone située sous le goujon en caoutchouc, tandis que dans les zones longitudinales au sud et au nord du goujon en caoutchouc, elle a une largeur imposée par le parcours trapézoïdal des côtés de la base du goujon en caoutchouc.

2. Rustine trapézoïdale selon la revendication précédente, caractérisée par la combinaison d'un goujon en caoutchouc (2) dont la base et la section transversale sont de forme trapézoïdale, avec une couche de caoutchouc (1) située au-dessous, elle aussi de forme trapézoïdale, contenant des cordes métalliques radiales (5) de dimensions égales à celles de la base du goujon en caoutchouc dans la zone située sous le goujon et d'une largeur variable en fonction de sa forme trapézoïdale, la couche mentionnée ci-dessus ressortant en relief d'une couche de toiles déviées ou non déviées (3) placée sous cette couche, ou, en l'absence de cette dernière, de la couche de caoutchouc (4a), la surface opposée à la surface d'attaque étant constituée de couches de caoutchouc (4a) et (4b) d'élasticités différentes, avec des bords (4c) émoussés, l'épaisseur totale (S₂) des couches de caoutchouc du goujon et de la couche contenant les cordes métalliques en correspondance avec l'extrémité inférieure et l'extrémité supérieure du goujon en caoutchouc étant supérieure à l'épaisseur totale (S₁) en correspondance avec le milieu, la somme des épaisseurs mentionnées cidessus et des épaisseurs des toiles gommées (3) et des couches de caoutchouc (4a) et (4b) étant égale aux épaisseurs correspondantes dans les parties latérales du pneu, respectivement (SP₂) en correspondance avec les zones du sous-talon et de la bande placées à la même distance, déterminée par la longueur du goujon en caoutchouc (2), et (SP₁) en correspondance avec le milieu, la section transversale du goujon en caoutchouc et de la couche de caoutchouc avec cordes métalliques placée sous le goujon étant elle aussi de forme trapézoïdale.

3. Rustine trapézoïdale selon les revendications précédentes, caractérisée par un goujon en caoutchouc (2), une souscouche en relief (1) de caoutchouc avec cordes métalliques radiales et par des couches de caoutchouc (4a) et (4b) avec des bords (4c) émoussés, l'épaisseur de la couche de colle (4a) étant augmenté de manière à donner la résistance nécessaire et l'élasticité à la rustine.

4. Rustine trapézoïdale selon les revendications précédentes, caractérisée par le fait que la surface de la couche (4b) de caoutchouc opposée à la surface d'attaque est pratiquement plate, la couche de caoutchouc (1) avec des cordes métalliques radiales étant en relief sur la surface d'attaque de la couche (3) des toiles gommées ou, en l'absence de cette couche, sur la surface d'attaque de la couche de caoutchouc (4a).

5. Procédé de fabrication de la rustine trapézoïdale selon les revendications précédentes, caractérisée par:
a) Découpage avec un emporte-pièce des éléments en caoutchouc cru qui forment les rustines d'une ou de plusieurs séries, dans les dimensions adéquates et de forme trapézoïdales, à partir de feuilles de caoutchouc de type approprié, de toiles gommées avec trames déviées ou non déviées, de feuilles de caoutchouc avec cordes métalliques et parcours radial.
b) Superposition des différents éléments en caoutchouc cru qui composent chaque rustine avec collage réciproque à l'aide d'un solvant ou d'un autre moyen adéquat.
c) Moulage avec un moule et un contre-moule semi-cylindrique pour obtenir le bombage de la rustine avec une convexité tournée vers la surface d'attaque, pour obtenir également l'exacte application en relief de la couche de caoutchouc contenant les cordes métalliques radiales sur les couches formées par les toiles gommées ou en l'absence de ces dernières sur les feuilles de caoutchouc (4), pour la vulcanisation nécessaire, les surfaces du moule et du contre-moule étant traitées de manière à provoquer le moletage des surfaces de chaque rustine, les surfaces d'attaque étant recouvertes d'une couche de polyester.

6. Moule pour fabriquer les rustines selon les revendications 1, 2, 3, et 4 avec le procédé selon la revendication 5, caractérisé par une surface semi-cylindrique (7) en caoutchouc d'une épaisseur appropriée, surface dans laquelle sont insérées les empreintes (7a) de la rustine P, caractérisé également par un contre-moule (6) semi-cylindrique constitué d'une chambre à air en caoutchouc gonflée avec une pression appropriée, caractérisé aussi par des moyens pour effectuer le réchauffement à vapeur du moule et du contre-moule et donc la vulcanisation de la rustine, et de moyens (10) pour aspirer l'air contenu dans la lame d'air entre le moule (7) et le contre-moule (6), les empreintes (7a) ayant le même bombage que le moule cylindrique pour obtenir des rustines bombées avec une convexité tournée vers la surface d'attaque et ayant une cavité (7a₁) d'une profondeur (h1) environ égale à l'épaisseur totale (h) du goujon en caoutchouc (2) et de la couche de caoutchouc, avec cordes métalliques radiales (1), avec une section transversale trapézoïdale et deux cavités (7a₂) attenantes, de profondeur égale à l'épaisseur de la couche de caoutchouc avec cordes métalliques, le contre-moule s'appuyant sur les parties de la rustines destinées à former la surface libre, de manière à ce que la surface s'adapte à leur forme.

## Claims

1. Trapezoidally shaped rubber patch to repair broken metallic cords in the sidewalls of tubeless or tube-type radial tyres, and manufacturing process" in which under the ply of radial metallic cords, no ply or one or more plies (3) are applied with embedded synthetic fibres displaced and not displaced in relation to the longitudinal axis, and one or more layers made of rubber of different elasticity and characteristics (4a) and (4b), and in which both the attaching and opposite surfaces are knurled, the rubber patch being curved in the longitudinal direction so that its convexity is directed towards the attaching surface, the rubber patch also being supplied with a rubber dowel (2) to be inserted in a window opening cut out of the sidewall of the tyre from which the broken or damaged cords have been removed, characterized by the fact that the layer of rubber (1) containing the radial metallic cords protrudes in relation to the flat attaching surface of the rubber patch, that is of the ply (3), and has the same width as the base of the dowel (2), in the area which it covers, while in the longitudinal area to the north and south of the dowel, the width is determined by the trapezoidal pattern of the sides of the base of the same dowel.

2. A trapezoidally shaped rubber patch according to the previous claim, characterized by the combination of a rubber dowel (2) with a trapezoidal shaped base and cross-section, with a layer of rubber below it (1), also this having a trapezoidal shape, containing radial metallic cords (5) of dimensions equal to those of the base of the dowel in the area to which it is applied and with a width that varies depending on its trapezoidal shape, the abovesaid layer protruding from a displaced or not displaced ply (3) below it or, in the absence of this, from the rubber layer (4a), the surface opposite to the attaching one being formed by layers of rubber (4a) and (4b) of different elasticity, with smoothed edges (4c), the total thickness (S₂) of the rubber layers of the dowel and that containing the metal cords in correspondence with the lower and upper extremities of the same dowel, being greater than the overall thickness (S₁) in correspondence with the centre point, the total thickness of the rubber (1), of the dowel (2), of the rubber plies (3) and of the rubber layers (4a) and (4b) being the same as those of the sidewalls of the tyre, respectively (SP₂) near both the bead heel and the belt located at the same distance determined by the length of the dowel (2), and (SP₁) in correspondence with the centre point, the crosssection of the dowel and the rubber ply with metallic cords under it, also being trapezoidally shaped.

3. A trapezoidally shaped rubber patch according to the previous claims, characterized by a dowel (2), a protruding lower ply (1) of rubber with radial metallic cords and rubber layers (4a) and (4b) with smoothed edges (4c), the depth of the layer of adhesive (4a) being increased to provide the necessary resistence and elasticity to the same rubber patch.

4. A trapezoially shaped rubber patch according to the previous claims, characterized by the fact that the surface of the rubber layer (4b) opposite the attaching one is almost flat, the rubber ply with radial metallic cords protruding from the attaching surface of the layer (3) of rubberized plies or, if that layer is absent, on the attaching surface of the rubber layer (4a).

5. Manufacturing process for the trapezoidally shaped rubber patch of the previous claims, characterized by:
a) Cutting by punches of the elements in non vulcanized that form the rubber patches of one or more series, in the sizes required and in trapezoidal shape, starting from sheets of rubber of a suitable type, rubberized plies with displaced or not displaced patterns, sheets of rubber with metallic cords and radial forms.
b) Superimposing of the different elements in non vulcanized rubber which form each rubber patch with the reciprocal gluing by solvent or other suitable means.
c) Moulding with a semicylindrical mould (7) and die (6) to obtain the necessary curvature and vulcanization of the rubber patch with the convexity directed towards the attaching surfaces of the exact application in protusion of the rubber ply containing the radial metallic cords on the layers formed by rubberized fabric or, in the absence of this, on sheets of rubber (4), the surfaces of the mould and die being treated in such a way as to cause the knurling of the surface of each of the same patches, the attaching surface also being covered by a layer of polyester.

6. Mould for the manufacturing of the rubber patches according to claims 1, 2, 3 and 4 with the process according to claim 5, characterized by a semicylindrical surface (7) in rubber of suitable depth in which the imprint (7a) of the rubber patch (P) is inserted, by a semicylindrical die (6) made by a rubber air chamber inflated to suitable pressure, by means to effect the steam heating of the mould and die and so of the vulcanization of the rubber patch and by means (10) to remove by section the air contained in the space between the mould (7) and the die (6), the imprints (7a) having the same curvature as the cylindrical mould to obtain patches that are curved with convexity directed towards the attaching surfaces and having a cavity (7a₁) of a depth (h₁) about equal to the total thickness (h) of the dowel (2) and of the rubber ply with radial metallic cords (1), trapezoidal cross section and two adjacent cavities (7a₂), of a depth equal to the thickness of the rubber ply with metallic cords, the die resting on the parts of the patch destined to form the free surface, in such a way that its surface adapts itself to their shape.

## Patentansprüche

1. "Trapezförmiges Pflaster für die Reparatur von Schäden der metallischen Kordfäden an den Seiten der radiale, Reifen mit oder ohne Schlauch und Herstellungsverfahren", bei dem, einer Gummischicht mit metallischen Kordfäden, unterlegt ist keine, oder eine, oder mehreren Gummischichten (3), die Fäden einschliessen die bezuglich ihrer Längsachse, wechselweise, parallel oder schräg sind, und eine oder mehreren Gummilagen (4a und 4b) unterschiedlicher Elastizität und unterschiedlichen Eigenschaften, Wobei die anzuklebende als auch die ihr gegenüberliegende Seite gerändelt sind und die longitudinalachse des Pflasters ist so gebogen dass seine Konvexität gegen die innere Oberfläche an den Seiten des Reifens gerichtet ist und Wobei verfügt das Pflaster über ein Dübel (2) aus Gummi, der in ein ausgeschnittenes Fenster an der Seite des Reifens, aus dem die abgerissenen oder beschädigten Kordfäden entfernt wurden, zu eingefügen ist, dadurch gekennzeichnet dass die Gummischicht (1) die die metallischen Kordfäden enthält, in Bezug auf die ebene Klebeoberfläche des Pflasters, beziehungsweise der Gummischicht (3), hervorragt und in dem Bereich, in dem es dem Dübel unterlegt ist, dieselbe Breite der Grundfläche des Dübels hat und in der Längsrichtung hingegen, südlich und nördlich des Dubels, wird die Breite der Gummischicht (1) von dem trapezförmigen Verlauf der Seiten der Grundfläche desselben Dübels bestimmt.

2. Trapezförmiges Pflaster wie in den obengenannten Patentansprüchen, dedurch gekennzeichnet dass der Dübel (2) dessen Grundfläche und dessen transversaler Abschnitt trapezförmig sind, mit einer unterlegten Gummischicht (1), die auch trapezförmig ist und radiale metallische Kordfäden (5) enthält, kombinimert ist, die die gleichen Messungen der Gestalt und der Grundfläche des Dübels hat, wo sie ihm unterlegt sind, und deren Breite im übrigen variabel ist in Bezug auf seine Trapezform; der obengenannte hervorragenden Schicht (1) ist auf eine Schicht (3) mit fiber Kordfäden gelegt oder, falls diese fehlen sollte, auf eine Gummilage (4a); die der auszuklebenden Konvexflächen gegenüberliegende OberfFläche bestehend aus Gummilagen (4a und 4b) von unterschiedlicher Elastizität und mit abgerundeten Kanten (4c), die Gesamtdichte (S₂) des Dübels (2) und der die metallischen Kordfäden (5) enthaltenden Schichten (1), in Bezug auf die unteren und oberen Grenzen desselben, grösser als die Gesamtdichte (S₁) in der Mitte ist; die Gesamte Messung der obengenannten Dichten als auch der Gummischichten (3) und der Gummilagen (4a und 4b) gleich der entsprechenden Gesamten Dichten in den Seiten der Reifen, beziehungsweise (SP2) und (SP1), und der Querschnitt des Dübels und der Gummischicht mit metallischen Kordfäden die ihm unterlegt, zusammen trapezförming seiend.

3. Trapezförmiges Pflaster wie in den obengenannten Patentansprüchen, gekennzeichnet durch ein Dübel (2), eine hervorragende Unterschicht (1) aus Gummi mit metallischen radialen Kordfäden und Gummischichten (4a und 4b) mit abgerundeten Kanten (4c), die Dicke der gummischicht (4a), um dem Pflaster die nötige Widerstandsfähigkeit und Elastizität zu verlichen vergrössert seiend.

4. Trapezförmiges Pflaster wie in den obengenannten Patentansprüchen, dadurch gekennzeichnet, dass die Oberfläche der Gummilage (4b), die der anzuklebenden Oberfläche gegenüberliegt, fast ganz eben ist, die Gummischicht mit metallischen radialen Kordfäden (1) über die anzuklebende Oberfläche der Gummischicht (3) mit fiber Kordfäden hervorragende oder, falls die genannte Schicht fehlen sollte, über die anzuklebende Oberfläche der Gummilage (4a).

5. Herstellungsverfahren für das trapezförmige Pflaster der obengenannten Patentansprüche, gekennzeichnet durch:
a) Zurechtschneiden mit Metallformen der Elemente, aus denen sich die Pflaster zusammensetzen, in den geforderten Ausmassen und in der Trapezform, wobei Rohgummiplatten des erforderlichen Typs mit fiber Kordenfäden und mit metallischen Kord und radialer Laufweise verwandt werden.
b) Ubereinanderschichtung der verschiedenen Elemente aus Rohgummi, aus denen jedes Pflaster besteht, mit gegenseitigem Ankleben mittels Klebestoffen oder anderen entsprechenden Mitteln.
c) Pressung mit einer halbzylindrischen Druckform (7) und Gegendruckform (6) um die erforderliche Biegung und die Vulkanisierung des Pflasters, wobei die Konvexität gegen die auzuklebende Oberfläche gerichtet ist zuerhalten und um das präzise Anbringen der hervorragenden Gummischicht (1), die die metallischen radialen Kordfäden enthält, über den Gummischicht (3) mit fiber Kordfädern oder falls diese fehlen, auf Gummilage (4) zu erhalten die Oberflächen der Druckform und Gegendruckform so behandelt seiend, dass die Rändelung der Oberfläche jedes Pflasters erfolgt; die anzuklebenden Oberflächen ihrerseits mit einer Polyesterschicht bedeckt werdend.

6. Druckform zur Herstellung der Pflaster der obengenannten Patentansprüche 1, 2, 3 und 4, mit Herstellungsverfahren wie unter 5 erwähnt, gekennzeichnet durch;
a)eine halbzylindrische Oberfläche (7) aus Gummi mit der erforderlichen Dichte, in welche die Abdrücke (7a) des Pflasters P eingearbeitet sind;
b) eine halbzylindrische Gegendruckform (6), die aus einer Luftkammer aus aufgeblasenem Gummi besteht mit dem erforderlichen Luftdruck;
c) Vorrichtungen um die Dampferhitzung der Druckform und der Gegendruckform und schliesslich die Vulkanisierung des Pflasters Zu erhalten;
d) Vorrichtungen (10) um die Luft in dem Zwischenraum zwischen Druckform (7) und Gegendruckform (6) abzusaugen, die Abdrücke (7a) mit dieselbe Biegung der zylindrischen Druckformen Vorgesehen, damit das Pflaster mit der Konvexität gegen die anzuklebende Oberfläche gerichtet ist, die Aushölung (7a₁) des Abdrucke (7a) mit einer Tiefe (h₁) die der Gesamtdichte (h) des Dübels (2) und der Gummischicht mit metallischen radialen Kordfäden (1) entsprechend, und die beiden anliegenden Aushöhlungen (7a₂) mit einer Tiefe die der Dichte der Gummischicht mit metallischen Kordfäden entsprechen, wobei die Gegendruckform auf das Teil des Pflasters aufliegt, das die freie Oberfläche bilden sollte.
